# EUROPÄISCHE PATENTANMELDUNG

(11) **EP 0 569 039 A2**
(43) Veröffentlichungstag der Anmeldung: **10.11.1993**
(21) Anmeldenummer: 93107487.6
(22) Anmeldetag: 07.05.1993
(51) Int. Cl.: B60P 7/04, B60J 7/10

(54) **Fahrzeug**

(30) Priorität: 07.05.1992 DE 9206151 U
(71) Anmelder: WIHAG Nutzfahrzeugtechnik Gesellschaft mit beschränkter Haftung & Co. Kommanditgesellschaft, D-4800 Bielefeld 14 (DE)
(72) Erfinder: Alberth, Günter, W-8390 Passau (DE)
(74) Vertreter: Stracke, Alexander, Dipl.-Ing.

(57) **Zusammenfassung**

1. Fahrzeug
2.1 Bei Lastkraftwagen, Anhängern oder Auflegern ist es notwendig, daß zum Transport bestimmter Güter die Bordwände fehlen. Es ist dann notwendig, daß das Ladegut gegen Witterungseinflüsse durch eine Abdeckplane geschützt wird. Diese muß dann gespannt werden. Durch die vorliegende Erfindung soll erreicht werden, daß die Abdeckplane über die gesamte Länge gleichmäßig und faltenfrei gespannt werden kann. Darüber hinaus soll die Zeit für das Spannen und Festlegen der Plane äußerst kurz sein.
2.2 Das erfindungsgemäße Fahrzeug ist im Bereich beider Längsseiten der Ladefläche mit jeweils einer drehbar gelagerten Spannwelle (10) versehen. Diese Spannwelle (10) kann mit mehreren Mitnehmern (12) oder mit einer durchgehenden Mitnehmerprofilstange (12a) bestückt sein. An der Abdeckplane sind entsprechend der Mitnehmer elastische Gurte befestigt.
2.3 Das erfindungsgemäße Fahrzeug ist besonders für den Transport von Schwerlastgut geeignet.
3. Figur 4

## Beschreibung

Die vorliegende Erfindung betrifft ein Fahrzeug mit einer von einem Rahmenprofil seitlich begrenzten Ladefläche und einer das gegebenenfalls auf der Ladefläche aufliegende Ladegut schützenden Abdeckplane.

Das in Rede stehende Fahrzeug kann ein Lastkraftwagen, ein Anhänger oder ein Auflieger sein. Bei derartigen Fahrzeugen fehlen zum Transport bestimmter Güter die Bortwände. Sofern das Ladegut durch eine Abdeckplane gegen Witterungseinflüße zu stützen ist, ist es notwendig, daß diese an dem Rahmenprofil so festgelegt wird, daß sie gespannt ist. Dazu werden bei einer ersten Ausführungsform mehrere Spannschlösser benötigt, die einzeln zu betätigen sind. Bei einer anderen Ausführungsform sind am Rahmenprofil Ösen angeschweißt, auf die die Plane gesteckt wird. Dazu sind die Öffnungen mit Lochverstärkungen versehen, damit die Abdeckplane nicht einreißt. Die Sicherung erfolgt mittels eines Seiles, welches durch die Ösen gesteckt wird.

Bei beiden Ausführungsformen ist das Spannen und Sichern der Abdeckplane äußerst zeitaufwendig, außerdem kann nicht sichergestellt werden, daß die Abdeckplane über die gesamte Länge gleichmäßig gespannt wird, so daß es auch noch zur Bildung von Falten kommen kann.

Der vorliegenden Erfindung liegt die Aufgabe zugrunde, ein Fahrzeug der eingangs beschriebenen Art so auszugestalten, daß die Zeit für das Spannen und Festlegen der Plane wesentlich verringert wird. Außerdem soll die Abdeckplane über die gesamte Länge gleichmäßig und faltenfrei gespannt werden.

Die gestellte Aufgabe wird durch eine sich im wesentlichen über die Länge der Ladenfläche im Bereich einer Längsseite gelagerten Spannwelle gelöst, die mit Mitnehmern oder mit einer durchgehenden Mitnehmerprofilstange ausgerüstet ist, an denen der zugeordnete Längskantenbereich der Abdeckplane festlegbar ist wobei die Spannwelle durch eine Drehung in eine die Abdeckplane straffende und in eine die Abnahme oder das Ansetzen der Abdeckplane ermöglichende Winkelstellung bringbar ist.

Durch die erfindungsgemäße zusätzliche Ausrüstung eines Fahzeuges ist es nunmehr möglich, die Abdeckplane durch eine Drehbewegung der Spannwelle zu straffen. Zuvor ist es lediglich notwendig, die entsprechend der Gestaltung der Spannwelle ausgelegte Abdeckplane mit den Mitnehmern oder der Mitnehmerprofilstange der Spannwelle in Kontakt zu bringen. Zweckmäßigerwesie ist im Bereich jeder Längsseite der Ladefläche jeweils eine Spannwelle gelagert.
Das Abnehmen und das Ansetzen der Abdeckplane an die jeweilige Spannwelle wird besonders einfach, wenn auf jede Spannwelle mehrere im Abstand zueinander angeordnete Mitnehmer drehfest aufgesetzt und im zugeordneten Längskantenbereich der Abdeckplane lagegerecht zu den Mitnehmern stehende Gegenstücke vorgesehen sind. Der Abstand zwischen den einzelnen Mitnehmern und den Gegenstücken kann beispielsweise zwischen 500 und 600 mm betragen. Darüber hinaus wird die Lösung konstruktiv besonders einfach, wenn jeder Mitnehmer aus einem Hohlprofilabschnitt mit unregelmäßigem Querschnitt gebildet ist und mit einem Mitnahmefinger ausgerüstet ist und wenn dann das Gegenstück als ein den Mitnahmefinger hintergreifender Haken ausgebildet ist. Eine besonders bedienungsfreundliche Lösung wird geschaffen, indem an der Abdeckplane oberhalb des Gegenstückes für den Mitnehmer ein fluchtender Spanngurt aus einem elastisch verformbaren Material befestigt ist, dessen ungespannte Länge zur Bildung einer Beule in der Abdeckplane kürzer ist als der zugeordnete Bereich der Abdeckplane. Dieser Gurt steht senkrecht zur Spannwelle. Im ungespannten Zustand hängt der Haken bzw. das Gegenstück oberhalb des in die Position gebrachten Mitnahmefingers. Der Abstand ist relativ klein. Da der Spanngurt kürzer ist als der zugeordnete Bereich der Abdeckplane wird in der Abdeckplane eine Beule gebildet, so daß man den Spanngurt mit der Hand erfassen kann. Durch geringe Kraftaufbringung kann der Spanngurt in seiner Länge so verändert werden, daß der Haken bzw. das Gegenstück den Mitnahmefinger hintergreift. Die Länge des Spanngurtes ist so auszulegen, daß die im ungespannten Zustand absichtlich herbeigeführte Beule in der Abdeckplane glattgezogen wird, wenn die Spannwelle in die straffende Winkelstellung gedreht wird. Durch den Spanngurt wird außerdem erreicht, daß sich das Gegenstück des Mitnehmers bzw. der Haken nicht ungewollt aushängt. Zweckmäßigerweise ist der Spanngurt mit dem Gegenstück für den Mitnehmer verbunden. Damit jedoch der untere Randbereich der Abdeckplane nicht frei hängt, ist in weiterer Ausgestaltung vorgesehen, daß auch die Abdeckplane mit dem Gegenstück bzw. dem Haken verbunden ist.

Damit die volle Breite der Ladefläche ausgenutzt werden kann, ohne daß in unzulässiger Weise Teile seitlich überstehen, ist vorgesehen, daß jede Spannwelle unterhalb des äußeren Randes der Ladefläche gelagert ist. Damit die Abdeckplane geschützt und auch geführt wird, ist vorgesehen, daß an das Rahmenprofil zumindest im Bereich jedes Mitnehmers der Spannwelle ein außen glattflächiges Führungsprofil derart angebracht ist, daß die äußeren Flächen des Abdeckprofiles und die Spitze des Mitnehmers bzw. des Mitnehmerfingers miteinander fluchten. Zumindest die vertikale Fläche des Führungsprofils sollte glattflächig sein. Durch diese Anordnung wird erreicht, daß sinngemäß durch die Fehlbewegung der Spannwelle der Randkantenbereich der Abdeckplane aufgewickelt wird. Die Drehbewegung der Spannwelle kann beispielsweise von Hand mittels eines im vorderen oder hinteren Bereich montiertes Getriebe in Form einer umschaltbaren Ratsche erfolgen. Je nach Ausrüstung des Fahrzeuges ist jedoch auch denkbar, daß jede Spannwelle durch einen elektrischen, hydraulischen oder pneumatischen Antrieb verdreht wird.

Weitere Kennzeichen und Merkmale einer vorteilhaften Ausgestaltung der vorliegenden Erfindung sind Gegenstand von weiteren Unteransprüchen und ergeben sich aus der nachfolgenden Beschreibung eines bevorzugten Ausführungsbeispiels.

Es zeigen:
- Figur 1: die Spannwelle mit den aufgesetzten Mitnehmern als Baueinheit rein schematisch,
- Figur 2: das Rahmenprofil des Fahrzeuges mit der Spannwelle und dem Führungsprofil und die noch nicht eingehängte Abdeckplane im Schnitt,
- Figur 3: eine Teilansicht der Abdeckplane nach der Figur 2,
- Figur 4: eine der Figur 2 entsprechende Darstellung, bei der jedoch die Spannwelle in einer die Abdeckplane straffende Stellung steht,
- Figur 5: die Mitnehmerprofilstange als Teilstück in schematischer Darstellung.

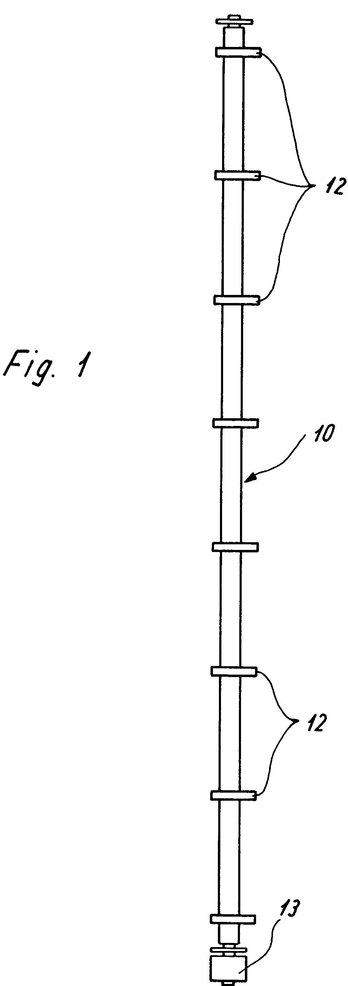

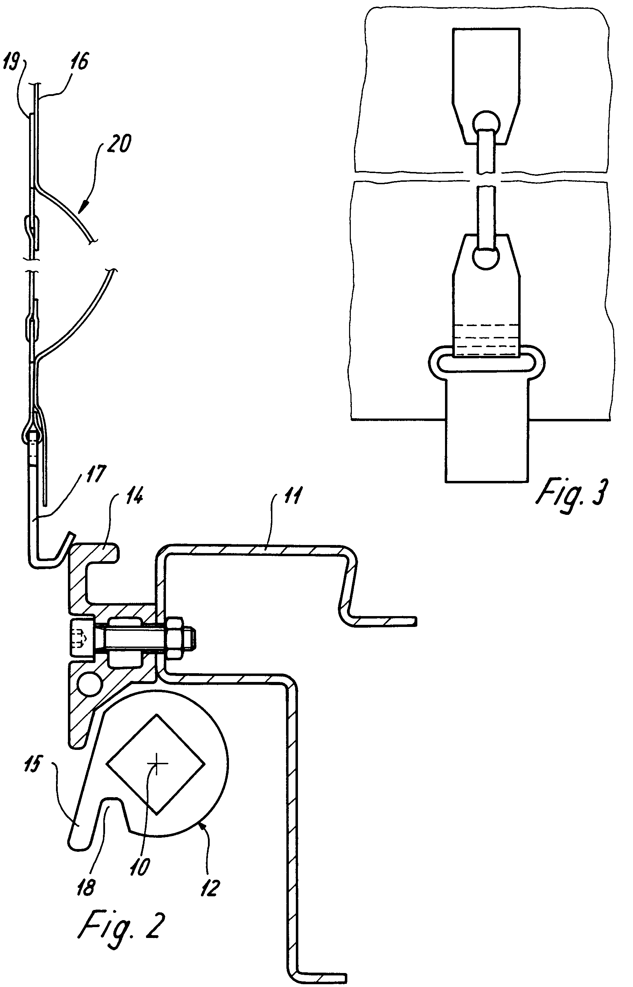

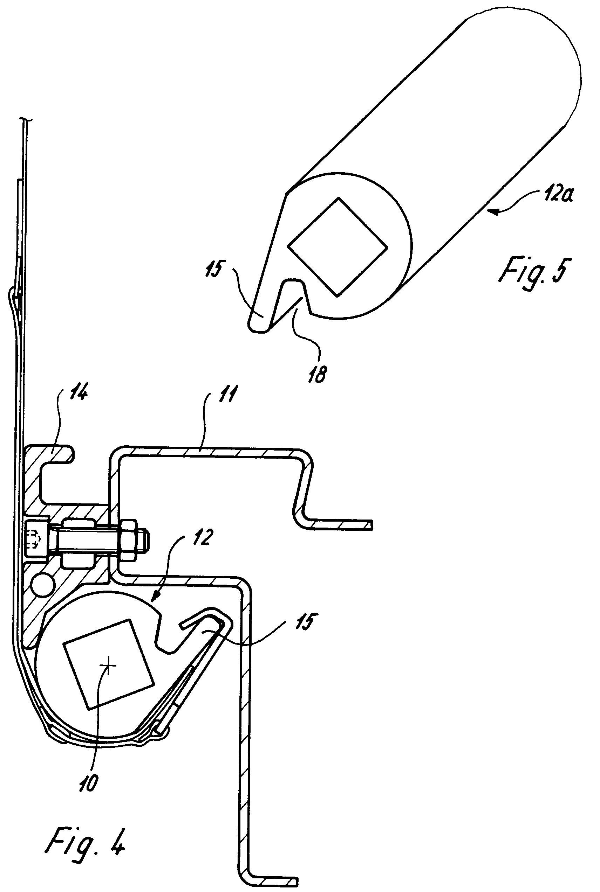

Die in Figur 1 dargestellte Spannwelle 10 stimmt im wesentlichen mit der Länge der Ladefläche eines Lastkraftwagens, eines Aufliegers oder eines Anhängers überein. Die Spannwelle 10 ist in nicht näher erläuterter Weise in den Endbereichen und bei einer entsprechenden Länge auch noch in den übrigen Bereichen in nicht dargestellten Lagerböcken gelagert, die an das Rahmenprofil 11 angeschraubt oder angeschweißt sind. Auf die Spannwelle 10 sind mehrere anhand der Figuren 2 und 4 näher erläuterte Mitnehmer 12 drehfest aufgesetzt. Der Abstand zwischen den Mitnehmern 12 kann beispielsweise 500 bis 600 mm betragen. In der Figur 1 ist durch das Bezugszeichen 13 ein Getriebe gekennzeichnet, um die Spannwelle 10 um einen vorgegebenen Winkel verdrehen zu können. In den beiden Endstellungen bleibt dann die Winkelstellung der Spannwelle 10 erhalten.
Aus den Figuren 2 und 4 geht hervor, daß an die äußere vertikale Fläche des Rahmenprofils 11 ein Führungsprofilstück 14 angeschraubt ist. Dieses Führungsprofilstück ist jedem Mitnehmer 12 zugeordnet. Es kann sich jedoch auch über die gesamte Länge des Rahmenprofils 11 erstrecken. Dieses Führungsprofilstück 14 ist im Strangpreßverfahren hergestellt und hat eine vertikale glatte Außenfläche, die parallel und im Abstand zu der vertikalen Außenfläche des Rahmenprofils 11 verläuft. Im dargestellten Ausführungsbeispiel ist diese Außenfläche jedoch mit Aussenkungen versehen, in die der Kopf einer Zylinderkopfschraube eingreift. Jeder Mitnehmer 12 ist scheibenförmig ausgebildet und besitzt einen Mitnehmerfinger 15. Die restliche Mantelfläche jedes Mitnehmers 12 entspricht einem Kreisbogen. Die Spitze des Mitnahmefingers 15 steht gegenüber der gedachten Fortführung dieses Kreisbogens vor. Damit ein mit einer Abdeckplane in Wirkverbindung stehender Haken 17 den Mitnahmefinger 15 hintergreifen kann ist der Mitnehmer 12 an der der glatten Fläche des Mitnahmefingers 15 abgewandten Seite mit einer Vertiefung 18 versehen. Jeder Haken 17 bildet das Gegenstück zu dem jeweiligen Mitnehmer 12. Die Abdeckplane 16 ist an dem der Spannwelle 10 zugeordneten Randbereich mit lagegerecht zu den Mitnehmern 12 stehenden Spanngurten 19 ausgerüstet, die aus einem elastisch verformbaren Material wie z. B. Gummi gefertigt sind. Jeder Spanngurt 19 ist in nicht näher erläuterter Weise an der Abdeckplane 16 befestigt. Im ungespannten Zustand ist die Länge jedes Spanngurtes 19 kleiner als der zugeordnete Bereich der Abdeckplane 16, so daß eine nach innen gerichtete Beule 20 entsteht. Da jeder Spanngurt an der Außenseite der Abdeckplane angeordnet ist, kann dieser mit der Hand leicht gegriffen werden. An jedem Spanngurt 19 ist ein Haken 17 befestigt, und zwar an dem Ende welches der Spannwelle 10 zugewandt liegt. Jeder Spanngurt 19 ist so an der Abdeckplane befestigt, daß der abgewinkelte Teil des Hakens 17 etwa auf Höhe der oberen Kante des Führungsprofils 14 bzw. des Rahmenprofils 11 steht. Damit die von dem Spanngurt auf die Abdeckplane übertragenen Kräfte besser verteilt werden, ist auch der unterhalb der Beule 20 liegende Bereich der Abdeckplane mit dem Haken 17 verbunden. Die Figur 2 zeigt, daß das freie Ende des Mitnahmefingers 15 in etwa in der senkrechten Projektion des freihängenden Hakens 17 steht, wenn die Spannwelle 10 in die Stellung gedreht wurde, in der die Haken 17 in die Mitnehmer 12 eingehängt werden. Durch die beschriebene Anbringung der Spanngurte 19 können diese nicht nur leicht gegriffen werden, sondern es wird auch verhindert, daß sich die Haken 10 wieder aushängen. Die Figur 4 zeigt die gespannte Stellung der Abdeckplane 16. Dazu wurde die Spannwelle 10 entgegen dem Uhrzeigersinn in die andere Endstellung gedreht. Je größer der Verdrehwinkel ist, um so stärker wird die Abdeckplane 16 gespannt. Die beiden Stellungen der Spannwelle 10 können durch eine entsprechende Auslegung des Getriebes 13 fixiert werden. Die Figur 4 zeigt, daß die Spannwelle 10 in Verbindung mit den Mitnehmern 12 und den Führungsprofilstücken 14 wie eine Wickelwelle gesehen werden kann. Die Figuren 2 und 4 zeigen außerdem, daß die Spannwelle 10 unterhalb des Rahmenprofils 11 liegt. Daraus folgt, daß die Ladefläche des Fahrzeuges größenmäßig nicht verändert wird.

Die Figur 5 zeigt die auf die Spannwelle 10 aufschiebbare, durchgehende Mitnehmerprofilstange 12a, deren Querschnitt mit den Mitnehmern 12 übereinstimmt. Die durchgehende Mitnehmerprofilstange 12a bietet den Vorteil, daß die Haken 17 an jeder Stelle eingehängt werden können.
Auch die Mitnehmerprofilstange 12a hat dann einen durchgehenden Mitnahmefinger 15 und eine durchgehende Vertiefung 18.

In nicht dargestellter Weise können die Spannwelle 10 und die Mitnehmerprofilstange 12a als ein einstückiges Strangpreßprofil mit an einem Ende vorgesehenen Zapfen zur Verdrehung sein.

## Patentansprüche

1. Fahrzeug mit einer von einem Rahmenprofil seitlich begrenzten Ladefläche und einer das gegenbenenfalls auf der Ladefläche aufliegende Ladegut schützenden Abdeckplane, **gekennzeichnet durch** mindestens eine sich im wesentlichen über die Länge der Ladefläche erstreckenden, im Bereich einer Längsseite gelagerten und mit Mitnehmern (12) oder mit einer durchgehenden Mitnehmerprofilstange (12a) ausgerüsteten Spannwelle (10), an denen der zugeordnete Längskantenbereich der Abdeckplane (16) festlegbar ist, wobei die Spannwelle (10) durch eine Drehung in eine die Abdeckplane (16) straffende und in eine die Abnahme oder das Ansetzen der Abdeckplane ermöglichende Winkelstellung bringbar ist.

2. Fahrzeug nach Anspruch 1, dadurch gekennzeichnet, daß im Bereich jeder Längsseite der Ladefläche jeweils eine Spannwelle (10) gelagert ist.

3. Fahrzeug nach Anspruch 1, dadurch gekennzeichnet, daß zur Festlegung der Abdeckplane (16) auf jede Spannwelle (10) mehrere im Abstand zueinander angeordnete Mitnehmer drehfest aufgesetzt und daß im zugeordneten Längskantenbereich der Abdeckplane (16) lagegerecht zu den Mitnehmern (12) stehende Gegenstücke vorgesehen sind.

4. Fahrzeug nach Anspruch 3, dadurch gekennzeichnet, daß jeder Mitnehmer (12) aus einem Hohlprofilabschnitt mit unregelmäßigem Querschnitt gebildet ist und mit einem Mitnahmefinger (15) ausgerüstet ist, und daß das Gegenstück als ein den Mitnahmefinger (15) hintergreifender Haken (17) ausgebildet ist.

5. Fahrzeug nach einem oder mehreren der vorhergehenden Ansprüche, dadurch gekennzeichnet, daß an der Abdeckplane (16) oberhalb jedes Gegenstückes für den Mitnehmer (12) ein fluchtender Spanngurt (19) aus einem elastisch verformbaren Material befestigt ist, dessen ungespannte Länge zur Bildung einer Beule (20) in der Abdeckplane (16) kürzer ist als der zugeordnete Bereich der Abdeckplane (16).

6. Fahrzeug nach Anspruch 5, dadurch gekennzeichnet, daß jeder Spanngurt (19) und das Gegenstück für den jeweiligen Mitnehmer (12) miteinander verbunden sind.

7. Fahrzeug nach Anspruch 1, dadurch gekennzeichnet, daß jede Spannwelle (10) unterhalb des äußeren Randes der Ladefläche des Fahrzeugs gelagert ist.

8. Fahrzeug nach Anspruch 7, dadurch gekennzeichnet, daß außen an das Rahmenprofil (11) zumindest im Bereich jedes Mitnehmers (12) ein außen glattflächiges Führungsprofil (14) derart angebracht ist, daß die äußeren Flächen des Führungsprofiles (14) und des Mitnehmers (12) miteinander fluchten.

9. Fahrzeug nach einem oder mehreren der vorhergehenden Ansprüche, dadurch gekennzeichnet, daß jeder Mitnehmer scheibenförmig ausgebildet ist und im Bereich außerhalb des Mitnahmefingers (15) kreisförmig ausgebildet ist.

10. Fahrzeug nach einem oder mehreren der vorhergehenden Ansprüche, dadurch gekennzeichnet, daß die Spannwelle (10) durch ein im vorderen oder hinteren Bereich der Ladefläche des Fahrzeuges angeordnetes Getriebe (13) verdrehbar ist.

11. Fahrzeug nach Anspruch 1, dadurch gekennzeichnet, daß die Mitnehmer (12) und die Mitnehmerprofilstange (12a) querschnittsgleich sind.

12. Fahrzeug nach Anspruch 1, dadurch gekennzeichnet, daß die Mitnehmerprofilstange (12a) und die Spannwelle (10) ein einstückiges Strangpreßprofil ist.
